# EUROPÄISCHE PATENTSCHRIFT

(11) **EP 0 809 767 B1**
(45) Veröffentlichungstag und Bekanntmachung des Hinweises auf die Patenterteilung: **11.08.1999**
(21) Anmeldenummer: 96904773.7
(22) Anmeldetag: 14.02.1996
(51) Int. Cl.: F16L 5/08, H02G 3/22

(54) **STÜTZVORRICHTUNG FÜR ROHRE IN MAUERDURCHFÜHRUNGEN**
SUPPORT DEVICE FOR PIPES IN WALL PASSAGES
DISPOSITIF DE SUPPORT POUR TUYAUX DANS DES TRAVERSEES DE MUR

(30) Priorität: 14.02.1995 DE 29502331 U
(43) Veröffentlichungstag der Anmeldung: 03.12.1997
(73) Patentinhaber: Kortmann, Karl, 48465 Schüttorf (DE)
(72) Erfinder: Kortmann, Karl, 48465 Schüttorf (DE)
(74) Vertreter: Busse & Busse Patentanwälte
(86) Internationale Anmeldenummer: EP9600629
(87) Internationale Veröffentlichungsnummer: WO9625616

(56) Entgegenhaltungen:
- DE-A- 3 425 641
- DE-A- 3 442 074
- DE-C- 3 828 693
- DE-U- 8 902 127

## Beschreibung

Die Erfindung betrifft eine Stützvorrichtung für Rohre in Mauer- oder Wanddurchführungen, Deckenöffnungen oder dgl., gemäß dem Oberbegriff des Anspruches 1.

Bei einer bekannten Stützvorrichtung gemäß DE-A- 38 28 693 ist zur Verlegung von Rohren in einer als Hauseinführung oder dgl. ausgebildeten Mauerdurchführung ein Verschlußteil vorgesehen, das zwischen zwei Flanschplatten einen gummielastischen Dichtkörper aufweist, der über eine axiale Verspannung der Flanschplatten einerseits zum umgriffenen Rohr hin und andererseits zur Wandung der Maueröffnung hin so verformbar ist, daß die Mauerdurchführung einen dichten Verschluß aufweist. Die exzentrische Anordnung der Durchgangsbohrungen erlaubt die Durchführung mehrerer Rohre.

Es ist Aufgabe der vorliegenden Erfindung, eine Stützvorrichtung für Rohre in Mauerdurchführungen der eingangs genannten Art zu schaffen, die mit geringem Aufwand einen hinreichend dichten Verschluß der Mauerdurchführung auch für ein einzelnes außermittig in der Maueröffnung verlaufendes Rohr ermöglicht.

Zur Lösung dieser Aufgabe zeichnet sich die Stützvorrichtung für Rohre durch die im kennzeichnenden Teil des Anspruchs 1 angegebenen Merkmale aus. Hinsichtlich wesentlicher weiterer Ausgestaltungen der Stützvorrichtung wird auf die Ansprüche 2 bis 14 verwiesen.

Die Stützvorrichtung nach der Erfindung hat als Verschlußteil zumindest zwei Schwenkklemmhülsen, deren Wandungen so bemessen sind, daß bei der Montage ein Ineinanderschieben in axialer Richtung möglich ist. Dabei sind gleichzeitig deren jeweils den Innen- bzw. den Außendurchmesser definierende Mittellängsachsen exzentrisch zueinander angeordnet. Die innere der beiden Schwenkklemmhülsen wird so auf das zur Verlegung vorgesehene Rohr aufgeschoben, daß dieses formschlüssig umgriffen ist. Danach ist nach Art einer Rohr-in-Rohr-Verbindung die zweite Schwenkklemmhülse über die erste geschoben und die beiden Bauteile können gemeinsam in der Maueröffnung positioniert werden.

Nach dem Einführen in die Maueröffnung können die beiden Schwenkklemmhülsen so gegensinnig zueinander verschwenkt werden, daß deren Wandungen, die durch Ausbildung mit den exzentrischen Durchgangsbohrungen unterschiedliche Wanddickenbereiche darbieten, einerseits unmittelbar in Verbindungseingriff gelangen und gegeneinander verpreßt werden und andererseits die äußere der beiden Schwenkklemmhülsen dem Öffnungsspalt zur Maueröffnung hin direkt verschließt. Damit bewirken die beiden Schwenkklemmhülsen über ihre elastische Deformation sowohl eine Abdichtung in deren gemeinsamen Verbindungsbereich als auch durch die Wandanlage der äußeren Schwenkklemmhülse eine Abdichtung des Spaltbereiches zur Maueröffnung hin.

Weitere Einzelheiten und Vorteile der Erfindung ergeben sich aus der nachfolgenden Beschreibung und der Zeichnung, die ein Ausführungsbeipiel einer erfindungsgemäßen Stützvorrichtung veranschaulicht. In der Zeichnung zeigen:
- Fig. 1: eine Schnittsdarstellung zweier eine Stützvorrichtung bildenden Schwenkklemmhülsen in Verbindungsstellung gemäß einer Linie I - I in Fig. 3,
- Fig. 2: eine Schnittsdarstellung der Stützvorrichtung gemäß einer Linie II - II in Fig. 3,
- Fig. 3: eine Schnittdarstellung der Stützvorrichtung gemäß einer Linie III - III in Fig. 2,
- Fig. 4: eine Schnittdarstelldung einer Mauerdurchführung in einer ersten Ausführung mit der Stützvorrichtung und einem in Montagestellung befindlichen Rohr,
- Fig. 5: eine Schnittdarstellung in einer Mauerdurchführung in einer zweiten Ausführung mit der Stützvorrichtung vor einer Maueröffnung,
- Fig. 6 bis Fig. 9: jeweilige Prinzipdarstellungen der Stützvorrichtung mit zwei Schwenkklemmhülsen in unterschiedlichen Schwenkpositionen,
- Fig. 10: eine Prinzipdarstellung der Stützvorrichtung mit drei Schwenkklemmhülsen in einer Montagestellung ähnlich Fig. 6, und
- Fig. 11 bis Fig. 22: jeweilige Stirn- bzw. Seitenansichten von Schwenkklemmhülsen in Einzeldarstellung mit jeweils einem Wandungsschlitz in unterschiedlichen Ausführungsformen.

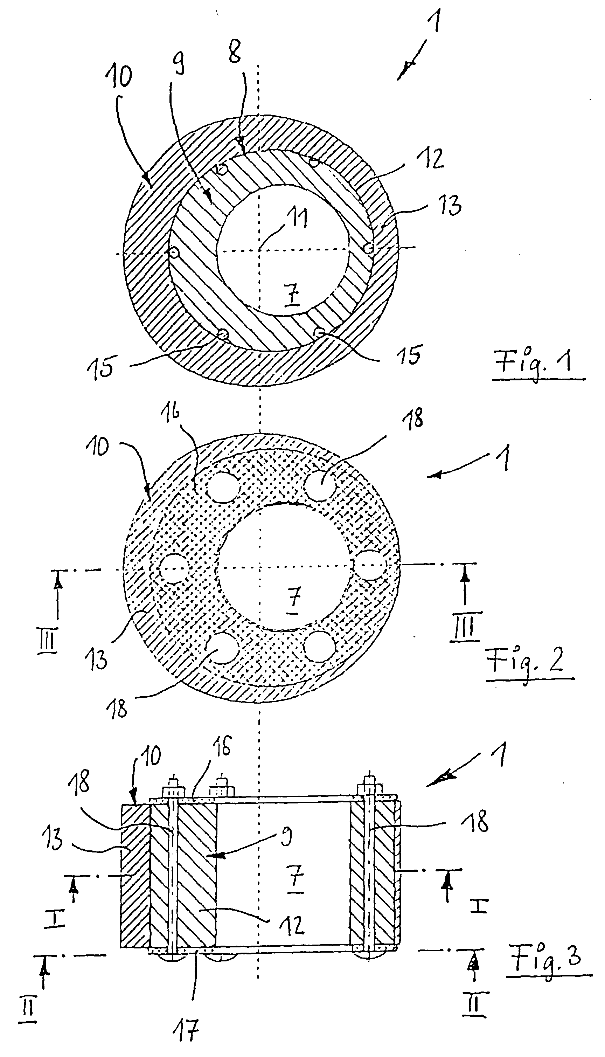

In Fig. 1 ist ein insgesamt mit 1 bezeichnetes Verschlußteil für eine Stützvorrichtung 2 (Fig. 4) dargestellt, mit der ein Rohr 3 bei dessen Verlegung in einen Mauer-, Decken- oder Wandteil 4 festlegbar ist. Das Rohr 3 wird dabei außenseitig von dem Verschlußteil 1 umfaßt und mit diesem gleichzeitig in der Montagestellung (Fig. 4) ein Öffnungsspalt 5 abgedichtet.

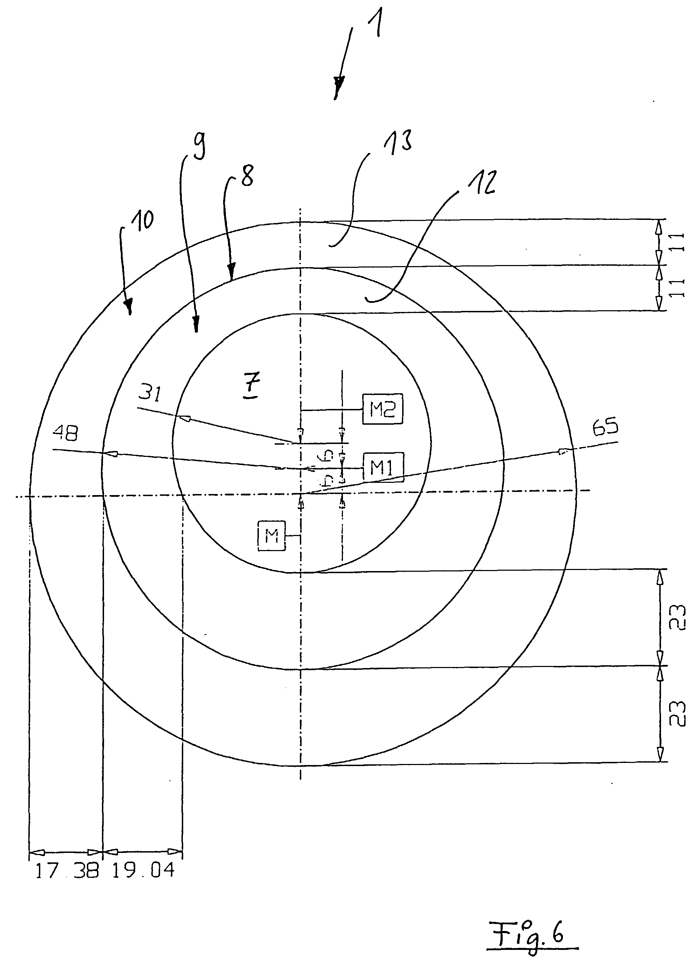

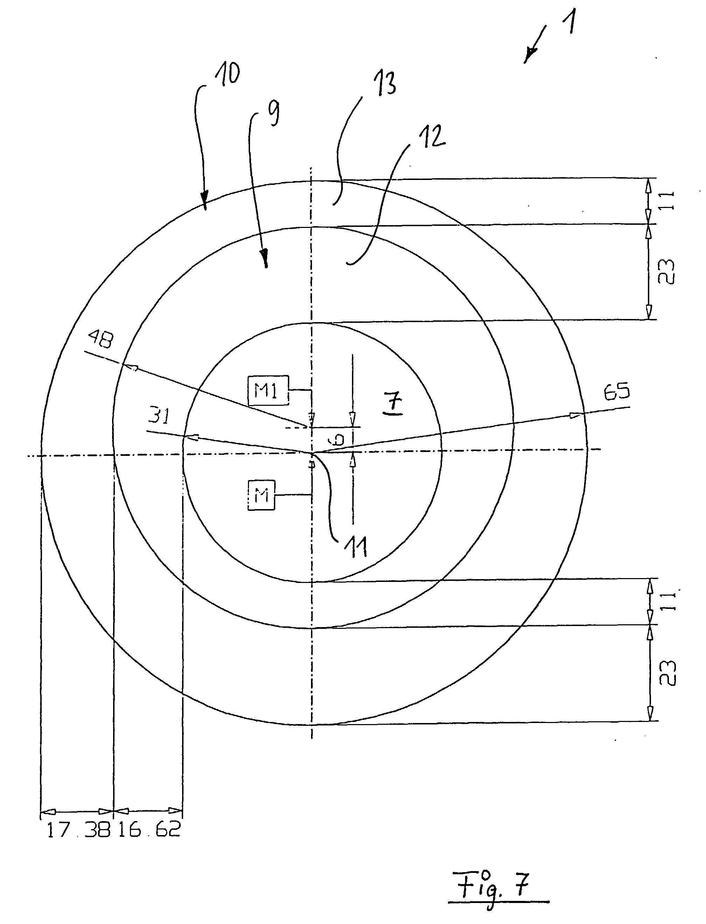

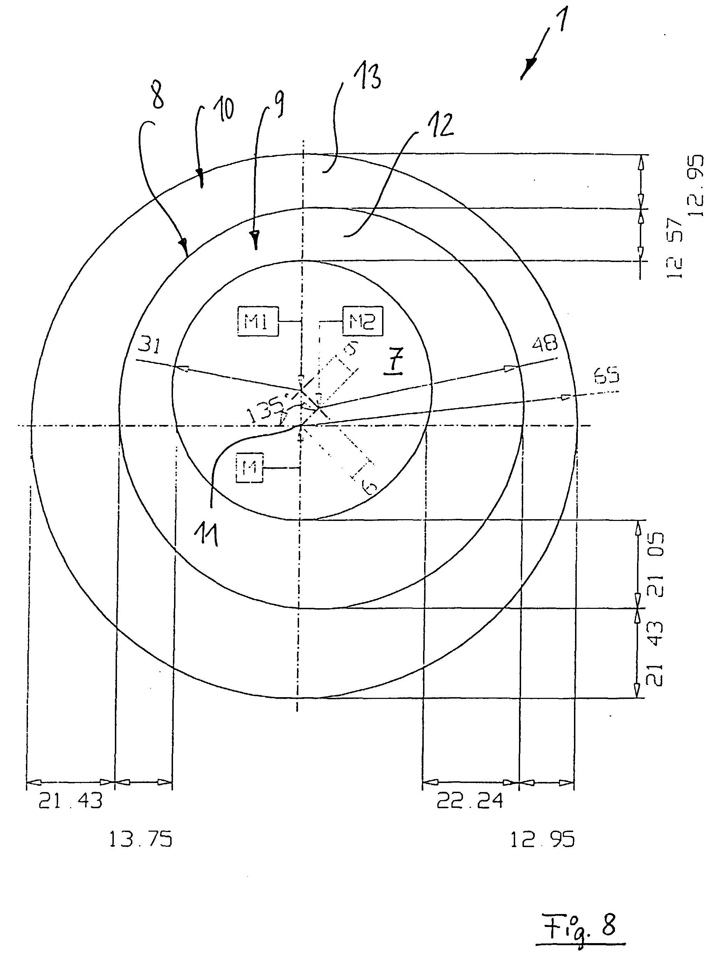

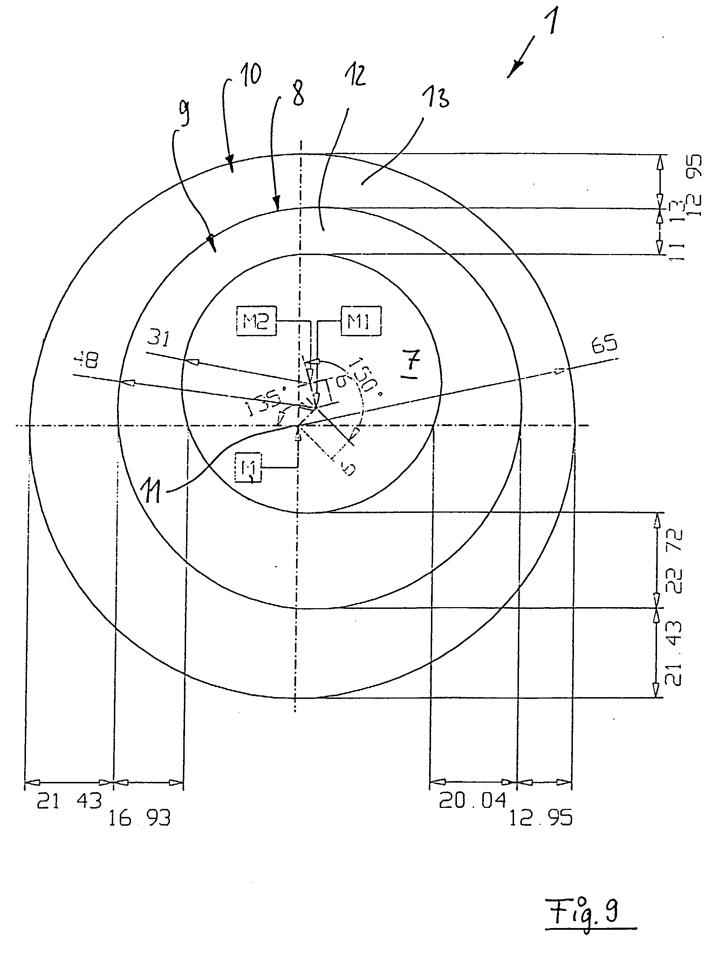

Die Schnittdarstellung gemäß Fig. 1 verdeutlicht dabei in Zusammenschau mit den Prinzipdarstellungen gemäß Fig. 6 bis 9 die erfindungsgemäße Ausbildung des Verschlußteiles 1, das von zumindest zwei jeweils exzentrische Durchgangsbohrungen 7, 8 aufweisenden Schwenkklemmhülsen 9, 10 gebildet ist, die in Richtung einer Mittellängsachse 11 des Rohres 3 zumindest bereichsweise derart ineinanderschiebbar sind, daß über eine nachfolgende Schwenkbewegung eine Verklemmung der beiden Schwenkklemmhülsen 9, 10 in einem den Öffnungsspalt 5 abdichtenden Verbindungseingriff erreicht ist.

Dazu sind die Schwenkklemmhülsen 9, 10 in zweckmäßiger Ausführung vollständig aus elastischem Material, beispielsweise Gummi oder dgl., gebildet, so daß die Wandungen 12, 13 der Schwenkklemmhülsen 9, 10 in Montagestellung einerseits unmittelbar gegeneinander verklemmt und andererseits im Öffnungsspalt 5 der jeweiligen Mauerdurchführung in einer abdichtenden Presstellung wandseitig anliegen (Fig. 4).

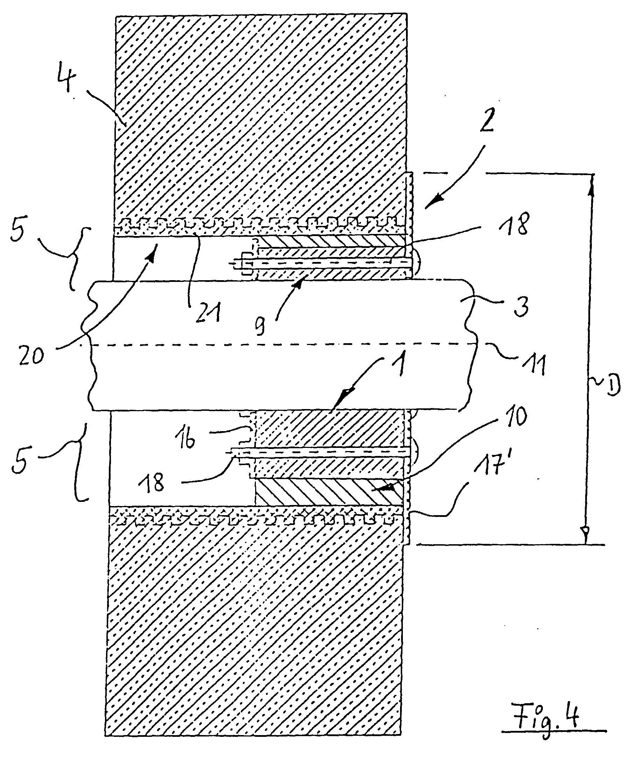

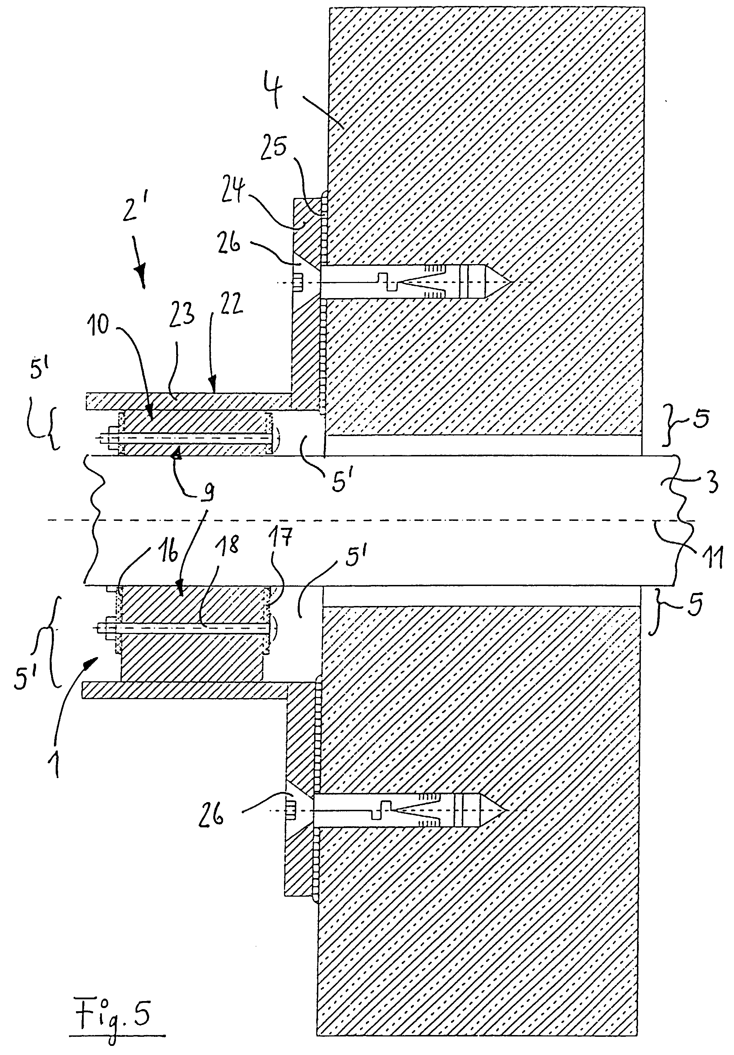

In vorteilhafter Ausführung ist die jeweils innere Schwenkklemmhülse 9 im Bereich ihrer Wandung 12 mit mehreren achsparallelen Durchgangsbohrungen 15 versehen, so daß die in Montagestellung befindlichen Schwenkklemmhülsen 9, 10 (Fig. 4, Fig. 5) in beiden Endbereichen mit jeweils einer Abdeckplatte 16, 17 verbunden sind. Damit werden die Schenkklemmhülsen 9, 10 über jeweilige, die Durchgangsbohrungen 15 durchdringende Verbindungsschrauben 18 zusätzlich in axialer Richtung verspannt, so daß die Dichtigkeit im Bereich des Öffnungsspalts 5 nach dem axialen Ineinanderschieben und radialen Verschwenken der Schwenkklemmhülsen 9, 10 durch einen höheren Anlagedruck im Bereich der Wandungen noch verbessert werden kann.

Die Darstellung gemäß Fig. 4 verdeutlicht dabei, daß die Abdeckplatte 16 mit einem den Durchmesser des Öffnungsspaltes 5 überdeckenden Außendurchmesser D ausgebildet ist, so daß die Abdeckplatte 16 an der Wand 4 abgestützt ist und den in Montagestellung befindlichen Schwenkklemmhülsen 9, 10 ein zusätzlicher, variabel einstellbarer Spreizdruck über das beim Verspannen der Verbindungsschrauben 18 wirksame Drehmoment vermittelbar ist.

Für eine Verbesserung des Verbindungseingriffs im Bereich der an der Wandung des Öffnungsspaltes 5 anliegenden Schwenkklemmhülse 10 kann die Wand 4 im Bereich der Durchführung mit einer Auskleidungsschicht 20 versehen werden. Diese Auskleidungsschicht 20 ist in zweckmäßiger Ausführung von einer in die Durchführung eingegossenen Rohrhülse 21 gebildet. Diese kann ebenfalls aus einem elastischem Material bestehen, so daß die Dichtigkeit des Verbindungseingriffs im Spaltbereich 5 zur äußeren der beiden Schwenkklemmhülsen 10 hin verbessert ist.

In Fig. 5 ist eine zweite Ausführungsform der Stützvorrichtung 2' dargestellt, wobei die beiden Schwenkklemmhülsen 9, 10 an einem vor dem Öffnungsspalt 5 angeordneten Rohrflansch 22 abgestützt sind. Dabei ist im Bereich des Rohrflansches 22 die vorbeschriebene Festlegung der Schwenkklemmhülsen 9, 10 an der Innenseite des Rohransatzes 23 vorgesehen und die Abdichtung des Öffnungsspaltes 5 bzw. 5' erfolgt über ein unterhalb der Flanschplatte 24 eingebrachtes Dichtteil 25, das bei der Verschraubung des Flanschrohres 22 mit der Wand 4 über mehrere Verbindungsschrauben 26 eingespannt wird.

In Fig. 6 bis 9 sind mehrere Prinzipdarstellungen der beiden in Verbindungsstellung befindlichen Schwenkklemmhülsen 9, 10 in geometrisch vereinfachter Ausführung dargestellt. Dabei werden ausgehend von einem Mittelpunkt M, der dem Mittelpunkt der Mauerdurchführung im Bereich des Öffnungsspaltes 5 entspricht, die jeweils bei Schwenkung der Schwenkklemmhülsen 9, 10 in die Montagestellung wirksamen Exzentrizitäten deutlich. Als Bezugsgrößen für die jeweils exzentrisch angeordneten Durchgangsbohrungen 7, 8 sind jeweilige Verschiebestellungen der Mittellängsachsen M1 und M2 bzgl. der Mittellängsachse M veranschaulicht. Dabei wird deutlich, daß das in der Durchgangsbohrung 7 befindliche Rohr (nicht dargestellt) auch dann flüssigkeits- und gasdicht umfaßt werden kann, wenn dieses außerhalb der Mittellängsebene M des Öffnungsspaltes 5 verlegt ist und dabei gleichzeitig die außermittige Lage des Rohres 3 im Spalt 5 kompensiert werden kann.

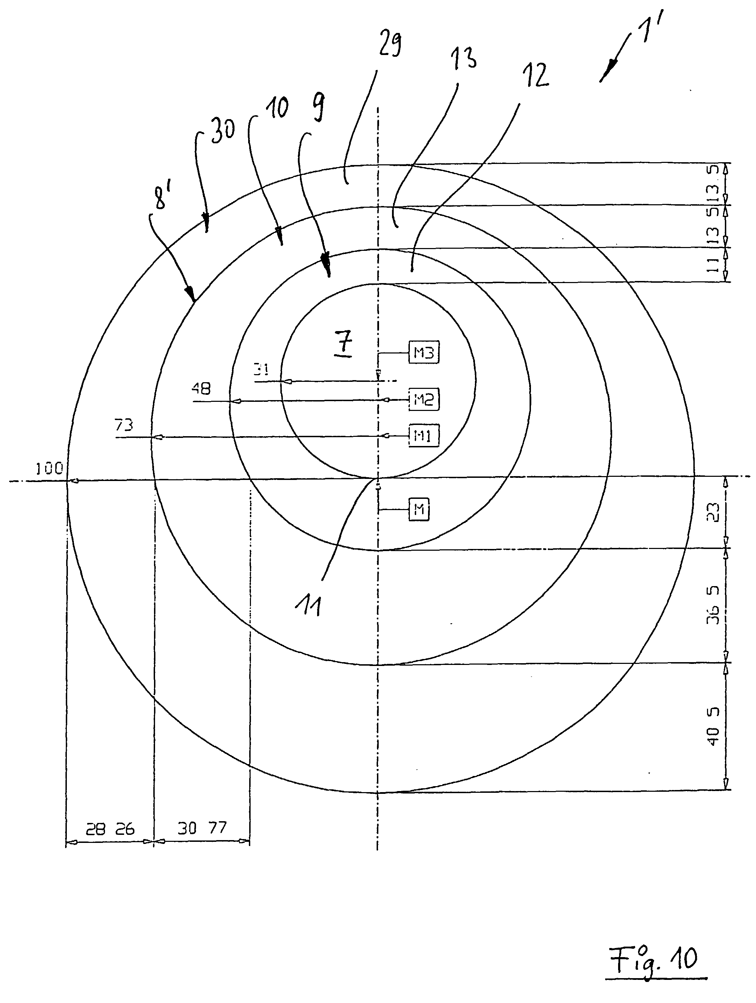

In Fig. 10 ist eine zweite Ausführungsform des Verschlußteiles 1' dargestellt, wobei dieses mit drei Schwenkklemmhülsen 9, 10 und 30 versehen ist, die in vorbeschriebener Art und Weise in Verbindungseingriff festlegbar sind. Ebenso ist denkbar, die Schwenkklemmhülsen 9, 10 und/oder 30 im Bereich ihrer jeweiligen Wandungen 12, 13, 29 in Richtung der Mittellängsachse 11 konisch auszubilden, so daß bereits bei der vorbeschriebenen Montage der Teile in axialer Richtung eine Abdichtung im Bereich der jeweils anliegenden Wandungsflächen erreichbar ist.

Bei einer hinreichend genauen Vorbearbeittung der jeweiligen Wanddurchführung, beispielsweise durch eine Bohrung, kann die außermittige Anordnung eines Rohres 3 auch bereits dadurch im Spaltbereich dicht verschlossen werden, daß lediglich eine der Schwenkklemmhülsen 9 oder 10 oder 30 eingeführt und entsprechend über eine Schwenkbewegung und/oder axialen Druck verspannt wird (nicht dargestellt). Außerdem ist denkbar, die Schwenkklemmhülsen zur Vereinfachung der Montage mit einem oder mehreren Längsschlitzen zu versehen oder die Schwenkklemmhülsen aus mehreren in axialer Richtung hintereinander angeordneten Teilen zusammenzusetzen.

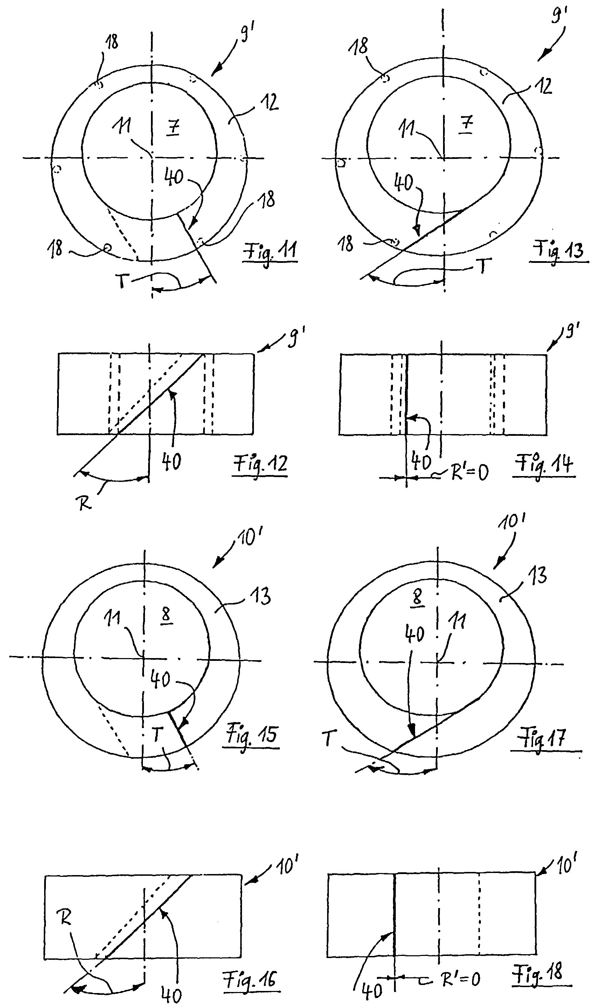

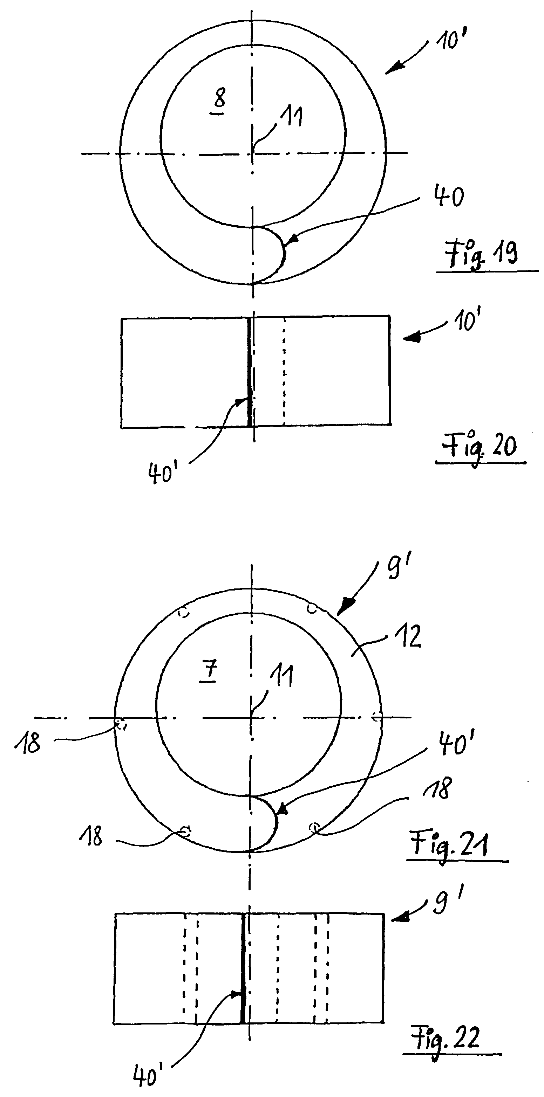

In Fig. 11 bis 22 sind die Schwenkklemmhülsen 9' bzw. 10' in einer jeweiligen Einzeldarstellung veranschaulicht, wobei deren Ausbildung mit einem jeweilige Wandungsbereiche 12 bzw. 13 vollständig trennenden Längsschlitz 40, 40' deutlich wird. Mit diesem Längsschlitz 40, 40' können die Schwenkklemmhülsen 9', 10' bei einer nachträglichen Dichtungsmontage in einer Maueröffnung, beispielsweise im Bereich eines Flanschrohres, auch über dessen einen vergrößteren Durchmesser aufweisenden Flanschansatz hinweggeschoben und in der vorgesehenen Montagestellung so festgelegt werden, daß über die dabei wirksamen Preßkräfte der Längsschlitz 40, 40' hinreichend dicht verschlossen ist (nicht dargestellt).

Zur Verbesserung der Dichtigkeit im Bereich der jeweiligen Längsschlitze 40 können diese mit einer Schrägstellung T, T' bzw. R, R' (Fig. 11 bis Fig. 18) in der jeweiligen Wandung 9', 10' verlaufen, so daß in Montagestellung die radialen und tangentialen Preßkräfte vollständig in den Bereich der beiden aneinanderliegenden Trennflächen des Längsschlitzes 40 eingeleitet und diese über eine verlängerte Anlagefläche zuverlässig dicht sind. Ebenso ist denkbar, den Längsschlitz 40' mit einer Bogenkontur auszubilden und so die Trenn- und Anlagefläche im jeweiligen Schlitzbereich zu verlängern (Fig. 19 bis Fig. 22).

## Patentansprüche

1. Stützvorrichtung für Rohre, insbesondere für eine Rohrverlegung in Mauer-, Decken- oder Wanddurchführungen, die mit einem in Montagestellung das Rohr (3) außenseitig umfassenden und einen zur Durchführung verbleibenden Öffnungsspalt (5,5') abdichtenden, zumindest bereichsweise aus elastischem Material bestehenden Verschlußteil (1,1') versehen ist, dessen das Rohr aufnehmende Durchgangsbohrung exzentrisch angeordnet ist, **dadurch gekennzeichnet**, daß der Verschlußteil (1,1') von zumindest zwei jeweils exzentrische Durchgangsbohrungen (7,8) aufweisenden Schwenkklemmhülsen (9,10;30;9',10') gebildet ist, die in axialer Richtung zumindest bereichsweise ineinanderschiebbar und über eine Schwenkbewegung in einem den Öffnungsspalt (5,5') abdichtenden Verbindungseingriff festlegbar sind.

2. Stützvorrichtung nach Anspruch 1, dadurch gekennzeichnet, daß die Schwenkklemmhülsen (9,10;30;9',10') jeweils in Montagestellung einerseits unmittelbar gegeneinander verklemmbar sind und andererseits die äußere Schwenkhülse (10) in der Mauerdurchführung in einer abdichtenden Preßstellung wandseitig anliegt.

3. Stützvorrichtung nach Anspruch 1, dadurch gekennzeichnet, daß die Schwenkklemmhülsen (9,10;30;9',10') jeweils vollständig aus einem gummielastischen Material gebildet sind.

4. Stützvorrichtung nach einem der Ansprüche 1 bis 3, dadurch gekennzeichnet, daß zumindest die jeweils innere Schwenkklemmhülse (9) in ihrer Wandung (12) mehrere achsparalle Durchgangsbohrungen (15) aufweist.

5. Stützvorrichtung nach einem der Ansprüche 1 bis 4, dadurch gekennzeichnet, daß die in Montagestellung befindlichen Schwenkklemmhülsen (9,10;30;9',10') in beiden Endbereichen mit jeweils einer Abdeckplatte (16,17) versehen sind und diese über die Durchgangsbohrung (15) durchdringende Verbindungsschrauben (18) verspannt sind.

6. Stützvorrichtung nach Anspruch 5, dadurch gekennzeichnet, daß eine der Abdeckplatten (16) mit einem den Durchmesser des Öffnungsspalts (5,5') überdeckenden Außendurchmesser (D) ausgebildet ist.

7. Stützvorrichtung nach einem der Ansprüche 1 bis 6, dadurch gekennzeichnet, daß die in radialer Richtung im Öffnungsspalt (5,5') außenliegende Schwenkklemmhülse (10) an einer die Wandung der Durchführung bildenden Auskleidungsschicht (20) anliegt.

8. Stützvorrichtung nach Anspruch 7, dadurch gekennzeichnet, daß die Auskleidungsschicht (20) als eine in die Durchführung eingegossene Rohrhülse (21) ausgebildet ist.

9. Stützvorrichtung nach Anspruch 7 oder 8, dadurch gekennzeichnet, daß die Auskleidungsschicht (20) aus einem elastischen Material gebildet ist.

10. Stützvorrichtung nach einem der Ansprüche 1 bis 9, dadurch gekennzeichnet, daß die Schwenkklemmhülsen (9,10;30;9',10') mit zumindest bereichsweise kegligen Wandungen ausgebildet sind.

11. Stützvorrichtung nach einem der Ansprüche 1 bis 10, dadurch gekennzeichnet, daß die Schwenkklemmhülse (9',10') im Bereich ihrer Wandung (12,13) mit einem sich im wesentlichen parallel zur Mittellängsachse (11) erstreckenden Längsschlitz (40,40') versehen ist.

12. Stützvorrichtung nach Anspruch 11, dadurch gekennzeichnet, daß der Längsschlitz (40) eine gerade Schnittebene definiert und diese in der Wandung (12,13) eine Schrägstellung (R,T) aufweist.

13. Stützvorrichtung nach Anspruch 11, dadurch gekennzeichnet, daß der Längsschlitz (40') eine bogenförmige Schnittebene definiert.

14. Stützvorrichtung nach einem der Ansprüche 11 bis 13, dadurch gekennzeichnet, daß der Längsschlitz (40,40') im jeweils die größte Materialdicke darbietenden Bereich der Wandung (12,13) angeordnet ist.

## Claims

1. A supporting device for pipes, particularly for pipes being laid in bushings in inside walls, outside walls and ceilings and which is provided with a closure part (1, 1') of which at least portions are of resilient material and which, when installed, engages around the outside ofthe pipe (3) and seals a gap (5, 5') remaining for clear passage, the through bore of the closure part which accommodates the pipe being eccentrically disposed, characterised in that the closure part (1, 1') is formed by at least two pivoting clamping sleeves (9, 10; 30; 9', 10'), each of which has eccentric through bores (7, 8), the said clamping sleeves being adapted to be pushed axially and at least partially into one another and, by a pivoting movement, fixed in a connecting engagement which seals the opening gap (5, 5').

2. A supporting device according to claim 1, characterised in that, in the installed position, the pivoting clamping sleeves (9, 10; 30; 9', 10') respectively can on the one hand be clamped directly against each other while on the other on the wall side, the outer pivoting sleeve (10) bears in a sealing pressure-applying position in the wall bushing.

3. A supporting device according to claim 1, characterised in that the pivoting clamping sleeves (9, 10; 30; 9', 10') are respectively completely formed from a rubber-elastic material.

4. A supporting device according to one of claims 1 to 3, characterised in that at least the respectively inner pivoting clamping sleeve (9) has a plurality of axially-parallel through bores (15) in its wall (12).

5. A supporting device according to one of claims 1 to 4, characterised in that both end portions ofthe pivoting clamping sleeves (9, 10; 30; 9', 10') which in the installed position are provided with respective cover plates (16, 17) which are secured by connecting screws (18) which pass through the through bore (15).

6. A supporting device according to claim 5, characterised in that one of the cover plates (16) is constructed with an outside diameter (D) which overlaps the diameter of the opening gap (5, 5').

7. A supporting device according to one of claims 1 to 6, characterised in that the pivoting clamping sleeve (10) which is on the outside in a radial direction in the opening gap (5, 5') bears on a lining coating (20) which forms the wall of the bushing.

8. A supporting device according to claim 7, characterised in that the lining coating (20) is constructed as a tubular sleeve (21) which is cast into the bushing.

9. A supporting device according to claim 7 or 8, characterised in that the lining coating (20) consists of an elastic material.

10. A supporting device according to one of claims 1 to 9, characterised in that the pivoting clamping sleeves (9, 10; 30; 9', 10') are constructed with walls, portions of which at least are conical.

11. A supporting device according to one of claims 1 to 10, characterised in that in the region of its wall (12, 13) the pivoting clamping sleeve (9', 10') is provided with a longitudinal slot (40, 40') extending substantially parallel with the longitudinal central axis (11).

12. A supporting device according to claim 11, characterised in that the longitudinal slot (40) defines a straight sectional plane which occupies an oblique position (R, T) in the wall (12, 13).

13. A supporting device according to claim 11, characterised in that the longitudinal slot (40') defines an arcuate sectional plane.

14. A supporting device according to one of claims 11 to 13. characterised in that the longitudinal slot (40, 40') is disposed in whichever area of the wall (12, 13) offers the greatest thickness of material.

## Revendications

1. Dispositif de support pour tuyaux, en particulier pour la pose d'un tuyau dans des traversées de murs, de plafonds ou de parois, qui est muni d'une partie d'obturation (1, 1') constituée de matériau élastique au moins par zones, entourant extérieurement le tuyau (3) en position de montage et étanchant un espace ouvert (5, 5') restant de la traversée, partie d'obturation dont l'orifice de passage recevant le tuyau est agencé de manière excentrée, caractérisé en ce que la partie d'obturation (1, 1') est formée d'au moins deux douilles de serrage pivotantes (9, 10; 30; 9', 10') présentant des orifices de passage respectivement excentrés (7, 8), lesdites douilles pouvant être emboîtées l'une dans l'autre au moins par zones dans la direction axiale et pouvant être fixées, via un mouvement pivotant, dans un engagement de liaison étanchant l'espace ouvert (5, 5').

2. Dispositif de support selon la revendication 1, caractérisé en ce que, d'une part, les douilles de serrage pivotantes (9, 10; 30; 9', 10') peuvent être serrées respectivement en position de montage directement l'une contre l'autre et, d'autre part, la douille pivotante extérieure (10) s'applique dans la traversée du mur en une position de compression étanche côté paroi.

3. Dispositif de support selon la revendication 1, caractérisé en ce que les douilles de serrage pivotantes (9, 10; 30; 9', 10') sont formées respectivement en totalité d'un matériau de gomme élastique.

4. Dispositif de support selon l'une quelconque des revendications 1 à 3, caractérisé en ce qu'au moins la douille de serrage pivotante intérieure (9) respective présente dans sa paroi (12) plusieurs orifices de passage (15) à axes parallèles.

5. Dispositif de support selon l'une quelconque des revendications 1 à 4, caractérisé en ce que les douilles de serrage pivotantes (9, 10; 30; 9', 10') se trouvant en position de montage sont munies, dans les deux zones d'extrémité, respectivement d'une plaque de recouvrement (16, 17) et celles-ci sont serrées par des vis de fixation (18) traversant l'orifice de passage (15).

6. Dispositif de support selon la revendication 5, caractérisé en ce que l'une des plaques de recouvrement (16) a un diamètre externe (D) recouvrant le diamètre de l'espace ouvert (5, 5').

7. Dispositif de support selon l'une quelconque des revendications 1 à 6, caractérisé en ce que la douille de serrage pivotante (10) se trouvant à l'extérieur dans la direction radiale dans l'espace ouvert (5, 5') s'appuie sur une couche de garnissage (20) formant la paroi de la traversée.

8. Dispositif de support selon la revendication 7, caractérisé en ce que la couche de garnissage (20) se présente sous la forme d'une douille tubulaire (21) scellée dans la traversée.

9. Dispositif de support selon la revendication 7 ou 8, caractérisé en ce que la couche de garnissage (20) est formée d'un matériau élastique.

10. Dispositif de support selon l'une quelconque des revendications 1 à 9, caractérisé en ce que les douilles de serrage pivotantes (9, 10; 30; 9', 10') sont conformées avec des parois coniques au moins par zones.

11. Dispositif de support selon l'une quelconque des revendications 1 à 10, caractérisé en ce que la douille de serrage pivotante (9, 10') est munie, dans la zone de sa paroi (12, 13), d'une fente longitudinale (40, 40') s'étendant sensiblement parallèlement à l'axe longitudinal central (11).

12. Dispositif de support selon la revendication 11, caractérisé en ce que la fente longitudinale (40) définit un plan de coupe rectiligne qui présente dans la paroi (12, 13) une position oblique (R, T).

13. Dispositif de support selon la revendication 11, caractérisé en ce que la fente longitudinale (40') définit un plan de coupe arqué.

14. Dispositif de support selon l'une quelconque des revendications 11 à 13, caractérisé en ce que la fente longitudinale (40, 40') est agencée respectivement dans la zone de la paroi (12, 13) présentant la plus grande épaisseur de matériau.
